# EUROPEAN PATENT APPLICATION

(11) **EP 4 227 622 A1**
(43) Date of publication of application: **16.08.2023**
(21) Application number: 23155811.5
(22) Date of filing: 09.02.2023
(51) Int. Cl.: F26B 3/12, B01D 1/18, B28C 1/00, F26B 25/00

(54) **PERFECTED CERAMIC SYSTEM**

(30) Priority: 11.02.2022 IT 202200002534
(71) Applicant: Poppi Clementino S.p.A., 42124 Reggio Emilia (IT)
(72) Inventor: BONICELLI, IVO DOMENICO, 42013 CASALGRANDE (RE) (IT)
(74) Representative: Paparo, Aldo

(57) **Abstract**

Perfected ceramic system 1 comprising a feeding tank 2 for feeding slip B, connected to a pumping line (3) ending in a plurality of nozzles 4. The plurality of nozzles 4 opens inside a dryer 5 in turn equipped with an inlet 6 of hot air A, propagated into the dryer 5 through first dispensing means 7, with a first collection outlet 8 for collecting the dried slip B' and with a second recovery outlet 9 for recovering a mixture of damp air AU and powders P placed in depression by a suction means 10. The suction means 10 is in fluid communication with the separator means 11 to carry out a separation of the damp air AU from the powders P.

The perfected ceramic system comprises an introduction line 12 adapted to receive the powders P, leaving the separator means 11, with a very fine particle size and therefore not suitable for the subsequent use thereof, and introduce it into the dryer 5.

## Description

The present invention relates to a perfected ceramic system.

The present invention can be applied in the ceramic sector.

The ceramic production cycle is carried out in different steps: the grinding of raw materials to make a mixture, called in the sector as slip, the atomisation of the slip, to obtain an atomised powder, the pressing of the atomised powder, to make the raw tile (also known in the sector as "green" tile), the glazing, during which the aesthetic decorations of the tile are applied on the raw tile and the step of firing the tile to obtain the finished product with the desired mechanical characteristics.

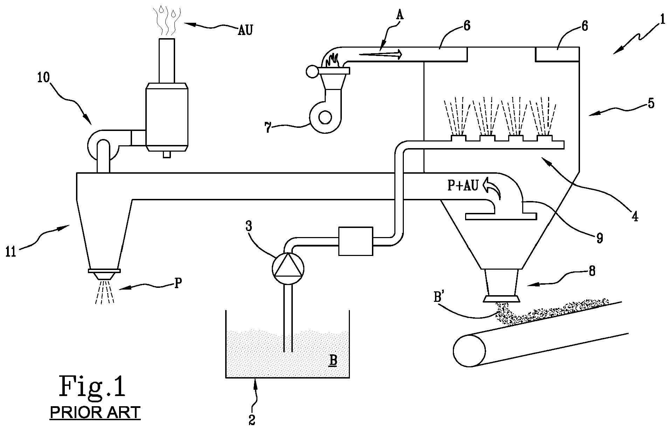

The system, subject-matter of the present invention, aims to intervene in the first atomisation step, therefore in the following description the aforesaid macrosteps will be explored also through the aid of figure 1 illustrating the prior art of the current ceramic systems.

Number 2 in figure 1 indicates a feeding tank for feeding slip B, a fluid-muddy mixture with a humidity of approximately 30%.

The slip B is sent from the feeding tank 2, through a pumping line 3, into a dryer 5.

The dryer 5, also known as the drying tower, consists of a conical body surmounted by a cylindrical body.

In a middle portion of the dryer 5, the slip suspension B is injected through a pumping group, operating at high pressure, and a group of nozzles 4, which favour the nebulisation thereof, facing upwards of the dryer 5.

A flow of hot air A, at about 600°C, produced by a burner and introduced by the effect of a pressurized fan, arrives at the upper part of the dryer 5. The temperature difference between air A and slip B produces an almost instantaneous evaporation of water, and the ground particles agglomerate forming small grains, also called atomised material B' (or dried slip), which are collected at the bottom of the dryer and moved, through conveyor belts, inside storage areas such as silos.

In a further intermediate portion of the dryer 5, below the group of nozzles 4 and above the bottom of the dryer 5, there is a suction mouth 9 which withdraws a mixture of air and water vapour AU (or damp air) and of the powders P, which have not agglomerated in the formation of small grains, which are dispersed inside the bottom of the dryer 5. The aforesaid withdrawal is favoured by a cyclone separator that captures the damp air AU, that is, the air mixed with the water vapour together with the powders P.

In some cases, the recovered powders P are re-introduced into the transport systems of the atomised material or directly into the storage silos mixing it with the atomised material contained therein.

In other cases, the recovered powders P are discharged into special tanks to melt them into water so as to re-introduce this mixture either into the mills or directly into the slip feeding tanks.

In both cases, the powder recovery systems and consequently the production yield of the current ceramic systems are not free from disadvantages.

Recovering the powders P by mixing them with the slip in granules B, or dried slip, involves, in the subsequent steps of the production cycle, problems related to the production of the tiles.

In fact, the pressing step, carried out to obtain the raw tile, takes place with the formation of pockets in the pressed product, caused by the powders P, which cause defects in the final yield of the tile. In particular, the aforesaid pockets can cause defects in the surface finish of the tile, or weakening of the structure of the tile itself.

Recovering the powders by mixing them with the liquid slip B, which has not yet been atomised, involves a regression of the process with consequent energy consumption. In fact, from a physical point of view, this recovery solution carries out a transformation of a solid substance, the powders P, into a liquid-solid mixture, the slip B, to return again to a solid substance, the atomised material B'.

This cycle regression can only be carried out through an energy input which penalizes the overall energy consumption absorbed by the ceramic system.

The object of the present invention is to improve the ceramic system described above and in particular to reduce the absorption of energy and raw materials by the same.

In particular, the object of the present invention is to propose a perfected ceramic system that is able to recover the powders P, generated inside the dryer, without burdening the overall energy consumption required by the ceramic system and improving the particle size quality of the dried slip B'. These purposes and advantages and others are all achieved by the invention in question as it is characterized by the claims below.

Further characteristics and advantages of the present invention will become more apparent in the following detailed description of some preferred, but not exclusive, embodiments of a perfected ceramic system illustrated by way of non-limiting example in the appended figures, in which:
- figure 1 illustrates a partial diagram of a ceramic system of the known art;
- figure 2 illustrates a partial diagram of a perfected ceramic system in accordance with the present invention;

With reference to the attached figures, a perfected ceramic system in accordance with the present invention is indicated with reference 1.

The ceramic system 1 has a feeding tank 2 containing slip B.

The slip B, a fluid-muddy mixture with a humidity of about 30%, contained in the feeding tank 2 is dispensed out of it through a pumping line 3 ending with a plurality of nozzles 4.

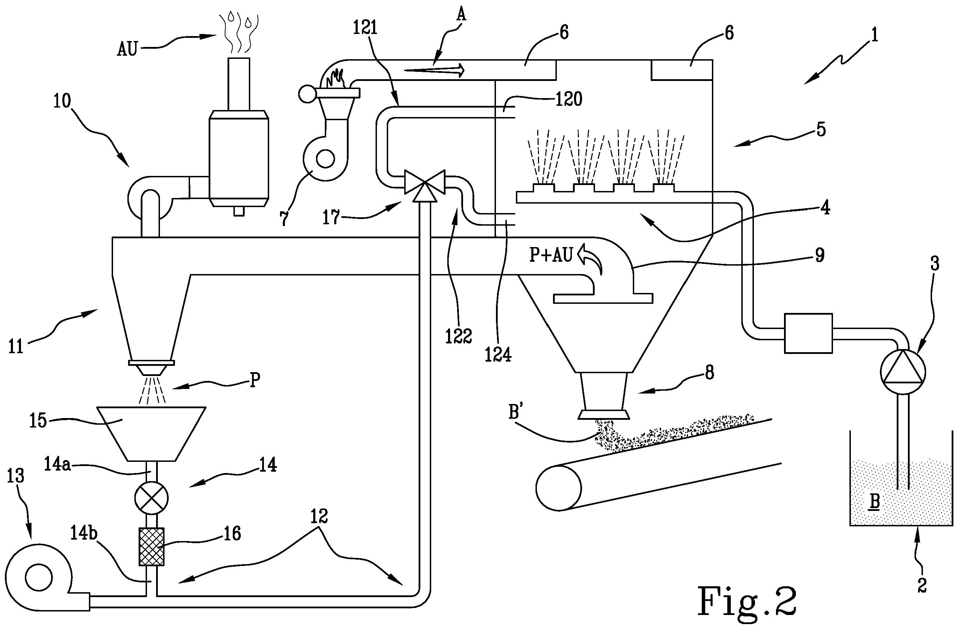

The plurality of nozzles 4 is placed inside a dryer 5, also called drying tower, inside which the slip B to be dried is introduced from the pumping line 3. As can be seen in the attached figure 2, the dryer 5 is preferably constituted by a conical body surmounted by a cylindrical body.

In the upper part of the dryer 5 there is an inlet 6 of hot air A propagated into the dryer 5 through the first dispensing means 7. In figure 2 the aforesaid first dispensing means 7 are preferably defined by a fan connected to a burner.

In the lower part of the dryer 5 there is a first collection outlet 8 for collecting the dried slip B', also called atomised material in the sector. The aforesaid dried slip B' is then conveyed through transport means, in the example a conveyor belt, to be stored in silos (not represented in the diagram of figure 2).

In an intermediate part of the dryer 5 there is a second recovery outlet 9 for withdrawing, inside the dryer 5, a mixture of damp air AU and powders P. The withdrawal of the aforesaid mixture is favoured by a depression, generated inside the second recovery outlet 9, promoted by suitable suction means 10.

As can be seen in figure 2, the plurality of nozzles 4 are located above the second recovery outlet 9 with each nozzle facing upwards so as to direct the slip mixture B towards the hot air A.

The difference in temperature between air A and slip B produces an almost instantaneous evaporation of water, and the ground particles agglomerate forming the dried slip B', which is collected at the bottom of the dryer 5 and recovered by the transport means.

Inside the dryer 5 it remains a further mixture formed by damp air AU and powders P of dried slip which have failed to agglomerate with the dried slip B'. This further mixture is withdrawn by the second recovery outlet 9 and, as a result of the suction means 10, directed to separator means 11.

The separator means 11, interposed between the second recovery outlet 9 and the suction means 10, carry out a separation of the damp air AU from the powders P.

In particular, due to a preferred embodiment of the suction means 10 defined by a separating cyclone, the damp air AU is conveyed to the upper part of the cyclone, and subsequently dispersed in the environment after suitable filtration processes, while the powders P are collected in the lower part of the cyclone.

The perfected ceramic system 1 further provides an introduction line 12 adapted to receive the powders P, leaving the separator means 11, to introduce them into the dryer 5.

The introduction line 12 carries out a pneumatic transport in the diluted phase favoured by feeding means 13.

The aforesaid feeding means 13 may be a high-prevalence aspirator, or a high-prevalence fan, or a blower or a compressor to generate a driving force inside the introduction line 12, under pressure or depression, adapted to transport air and powders P inside the dryer 5.

The initial part of the introduction line 12 has a connection branch 14.

The connection branch 14 has one end 14a connected to a collection tank 15, located downstream of the separation means 11 to collect the powders P leaving the separation means 11, and a second end 14b in fluid communication with the introduction line 12.

The aforesaid connection branch 14 can provide, between the first and second ends 14, 14b, a bag filter 6 adapted to carry out a further separation and selections of the powders P to be introduced into the dryer 5.

The terminal part of the introduction line 12 provides, in a first variant, at least a first outlet 120 opening inside the dryer 5. The location of said first outlet 120 is above the second recovery outlet 9 to prevent part of the powders P from being again intercepted by the recovery outlet 9.

The introduction line 12, as illustrated in figure 2, is connected to a three-way valve 17 so as to divide the line 12 into two branches: a first and a second branch 121 and 122.

The first branch 121 has the aforesaid outlet 120 opening into the dryer 5 at a height overlying the height at which the plurality of nozzles 4 are located. In other words, the first branch 121 has the aforesaid outlet 120 in an intermediate position between the plurality of nozzles 4 and the hot air inlet 6. In this way, part of the powders P can be conveyed against the slip B so as to aggregate with the fluid-muddy mixture.

The second branch 122 has a second outlet 124 opening into the dryer 5 and a height underlying the height at which the plurality of nozzles 4 are located. In other words, the second branch 122 has the second outlet 124 in an intermediate position between the plurality of nozzles 4 and the second recovery outlet 9. In this way, part of the powders P can be conveyed against the dried slip B' so as to aggregate with the dried slip agglomerates B'.

By acting on the three-way valve 17 it is possible to fragment the amount of powders P leaving the first or second outlet 120, 124 and therefore to vary the height of introduction of the powders P into the dryer 5.

The present invention achieves important advantages.

First of all, the perfected ceramic system withdraws the powders with a very fine particle size, avoiding mixing the powders P with the dried slip B', and introducing them into the dryer 5, exploiting the humidity contained in the jacket of the dryer 5, favours an agglomeration of the powders P with the dried slip B'. In this way, by avoiding mixing the powders P with the dried slip B', any manufacturing defects of the tiles in the subsequent processing steps of the production cycle are prevented or reduced. Secondly, by avoiding introducing the powders P into the tank 2, a considerable saving of primary energy and a reduction of the greenhouse effect are achieved as a result of the reduction of the carbon dioxide produced by the ceramic system 1.

## Claims

1. A perfected ceramic system (1) of the type comprising:
- a feeding tank (2) for feeding slip (B) connected to a pumping line (3) ending in a plurality of nozzles (4);
- a dryer (5), into which the slip (B) to be dried arrives through the pumping line (3), having an inlet (6) of hot air (A) propagated into the dryer (5) through a first dispensing means (7), a first collection outlet (8) for collecting the dried slip (B'), a second recovery outlet (9) for recovering a mixture of damp air (AU) and powders (P) placed in depression by a suction means (10);
- a separator means (11), interposed between the second recovery outlet (9) and the suction means (10), to carry out a separation of the damp air (AU) from the powders (P);
**characterised in that** it comprises an introduction line (12) adapted to receive the powders (P) leaving the separator means (11) to introduce them into the dryer (5).

2. The perfected ceramic system according to claim 1, wherein said introduction line (12) carries out a pneumatic transport in the dilute phase through a feeding means (13).

3. The perfected ceramic system according to claim 2, wherein said feeding means (13) is defined by a high-prevalence aspirator, or by a high-prevalence fan, or by a blower or by a compressor to generate a driving force inside the introduction line (12), under pressure or depression, adapted to transport air and powders (P) inside the dryer (5).

4. The perfected ceramic system according to claim 1, wherein said introduction line (12) provides a connection branch (14) having a first end (14a) connected to a collection tank (15), located downstream of the separation means (11) to collect the powders (P) leaving the separation means (11), and a second end (14b) in fluid communication with the introduction line (12).

5. The perfected ceramic system according to claim 4, wherein said connection branch (14) can provide, between the first and second ends (14a, 14b), a bag filter (16).

6. The perfected ceramic system according to claim 1, wherein said feeding line (12) has at least a first outlet (120) opening inside the dryer (5) above the second recovery outlet (9) to prevent part of the powders (P) from being again intercepted by the recovery outlet (9).

7. The perfected ceramic system according to claim 6, wherein said feeding line (12) has a three-way valve (17) adapted to divide the feeding line (12), at the terminal section thereof, into a first branch (121) and a second branch (122); said first branch (121) having a first outlet (120) located in the dryer (5) at a height overlying the height at which the plurality of nozzles (4) are located, said second branch (122) having a second outlet (124) located in the dryer (5) at a height underlying the height at which the plurality of nozzles (4) are located; said three-way valve (17) allowing choking the quantity of powders (P) leaving the first and second outlets (120, 122) by varying the height at which the powders (P) are introduced inside the dryer (5).
